# EUROPÄISCHE PATENTSCHRIFT

(11) **EP 2 858 204 B1**
(45) Veröffentlichungstag und Bekanntmachung des Hinweises auf die Patenterteilung: **30.05.2018**
(21) Anmeldenummer: 14179694.6
(22) Anmeldetag: 21.06.2012
(51) Int. Cl.: H04B 15/02

(54) **Drehübertrager für Werkzeugmaschinen**
Rotary transmitter for machine tools
Transformateur tournant pour machines-outils

(30) Priorität: 16.08.2011 DE 102011080973
(43) Veröffentlichungstag der Anmeldung: 08.04.2015
(62) Teilanmeldung aus: 12730891.4
(73) Patentinhaber: KOMET Deutschland GmbH, 74354 Besigheim (DE)
(72) Erfinder: Graf, Heiko, 76744 Wörth am Rhein (DE)
(74) Vertreter: Wolf, Eckhard

(56) Entgegenhaltungen:
- EP-B1- 1 856 705

## Beschreibung

Die Erfindung betrifft einen Drehübertrager für Werkzeugmaschinen mit einer induktiven Übertragungsstrecke für elektrische Energie, mit einem maschinenfesten Statorteil, das eine in einem Primärstromkreis angeordnete Primärwicklung aufweist, mit einem werkzeugfesten, um eine Rotationsachse drehbaren Rotorteil, das einen Sekundärstromkreis mit einer von der Primärwicklung über einen Luftspalt getrennten Sekundärwicklung aufweist, und mit stator- und rotorseitigen Sende- und Empfangselementen zur bidirektionalen berührungsfreien Datenübertragung.

Drehübertrager dieser Art werden beispielsweise in Werkzeugmaschinen mit Verstellwerkzeugen eingesetzt (EP 1 856 705 B1 oder DE102005011197). Bei dem bekannten Drehübertrager sind je einer statorseitige und eine rotorseitige Energiewicklung für die induktive Energieübertragung nach dem Transformatorprinzip vorgesehen. Die Energiewicklungen sind durch je eine statorseitige und rotorseitige Kernpartie voneinander getrennt, wobei die statorseitigen und rotorseitigen Kernpartien an einander zugewandten Enden über einen Luftspalt einander zugewandt sind. Zusätzlich sind bei dem bekannten Drehübertrager stator- und rotorseitige Sende- und Empfangselemente vorgesehen, die einander paarweise zugeordnete, stator- und rotorseitige Kopplungswindungen für die induktive Datenübertragung aufweisen und die an eine Sende- und Empfangselektronik angeschlossen sind. Eine wesentliche Forderung an diese Drehübertrager besteht darin, dass bei möglichst geringem Bauraum hohe elektrische Leistungen und große Datenmengen übertragen werden können. Außerdem sollen die Systeme robust und einfach in der Handhabung sein, da sie unter rauen Umgebungs- und Einsatzbedingungen zuverlässig arbeiten müssen. Sowohl bei der Herstellung unter Verwendung toleranzbehafteter Bauteile und der teilweise maschinellen Fertigung der Koppelelemente, als auch beim praktischen Einsatz, bei welchem Rotor-, Stator- und Ansteuerelektronik im Reparatur- und Wartungsfall austauschbar sein müssen, ergeben sich Unterschiede in den Komponenten, welche die Eigenschaften sowohl der Energie- als auch der Datenübertragung beeinflussen können. Zudem besteht bei der gebotenen kompakten Bauweise durch die räumliche Nähe von Energie- und Datenübertragungselementen das Problem, dass die Energieübertragung die Datenübertragung stören kann. Trotz vielfältiger konstruktiver Maßnahmen zur Reduzierung dieses Einflusses durch Abschirmung, Symmetrisierung, störungsreduzierte Schaltungstechnik, bedeutet dies, dass der Übertragungsleistung, der Bauraumreduzierung, der Datenrate, der Flexibilität und nicht zuletzt auch den Systemkosten Grenzen gesetzt sind, die den Anwendungsbereich beschränken.

Die Wechselspannung für die Energieübertragung wird im Falle der vorliegenden Erfindung zweckmäßig in einem Wechselrichter nach Art einer Rechteckspannung hergestellt. In diesem Falle treten vor allem bei den Nulldurchgängen höherfrequente Störsignale auf, die wegen der kompakten Anordnung von Energie- und Datenübertragungsstrecke in einem Drehübertrager zu Störungen bei der Datenübertragung führen können.

Ausgehend hiervon liegt der Erfindung die Aufgabe zugrunde, die auf der Energieübertragungsstrecke übertragbare Leistung zu vergrößern, ohne dabei die Datenübertragung zu stören.

Zur Lösung dieser Aufgabe werden die in den Patentansprüchen 1 und 2 angegebenen Merkmalskombinationen vorgeschlagen.

Die erfindungsgemäße Verfahrensweise besteht im Wesentlichen darin,
a) dass die Daten über die bidirektionale Datenübertragungsstrecke in Form von Datenpaketen in Zeitfenstern übertragen werden,
b) dass die Information der zeitlichen Lage des Nulldurchgangs eines Wechselstroms in der Energieübertragungsstrecke ermittelt wird,
c) und dass aufgrund der Information der zeitlichen Lage des Nulldurchgangs des Wechselstroms im Primärstromkreis oder im Sekundärstromkreis der Energieübertragungsstrecke die Zeitfenster für das Übertragen der Datenpakete so festgelegt werden,
   - dass die Zeitfenster zwischen zwei aufeinanderfolgenden Nulldurchgängen des Wechselstroms liegen
   - und jeweils einen von den Nulldurchgängen des Wechselstroms zeitlich beabstandeten Anfangs- und Endpunkt haben.

Schaltungstechnisch lässt sich dies gemäß der Erfindung dadurch realisieren, dass das statorseitige und das rotorseitige Sendeelement mit je einer Steuerbaugruppe verbunden ist, die einen Zwischenspeicher enthält, in welchem Datenpakete für die Übermittlung zum zugehörigen rotorseitigen oder statorseitigen Empfangselement in einem definierten Zeitfenster abgelegt sind, wobei die zeitliche Länge des Zeitfensters kleiner ist als die halbe Periode des die Primärwicklung in dem Primärstromkreis und/oder die Sekundärwicklung in dem Sekundärstromkreis durchfließenden Wechselstroms, und wobei der zeitliche Anfang und das zeitliche Ende des Zeitfensters einen zeitlichen Abstand von den aufeinanderfolgenden Nulldurchgängen des die Primärwicklung und/oder die Sekundärwicklung durchfließenden Wechselstroms aufweisen.

Im Folgenden wird die Erfindung anhand der in der Zeichnung in schematischer Weise dargestellten Ausführungsbeispiele näher erläutert. Es zeigen
- Fig. 1: eine Seitenansicht eines in eine Maschinenspindel eingespannten Werkzeugkopfs mit Drehübertrager für die Energie- und Datenübertragung in teilweise geschnittener Darstellung;
- Fig. 2: ein Schaltschema des Drehübertragers mit statorseitigem Primärstromkreis und rotorseitigem Sekundärstromkreis;
- Fig. 3: ein Optimierungsdiagramm für die Bestimmung der optimalen Betriebsfrequenz der Energieübertragungsstrecke;

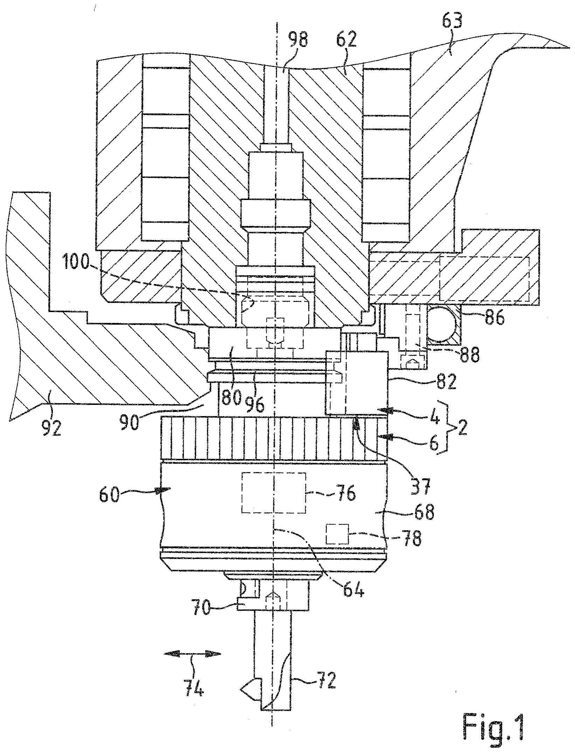

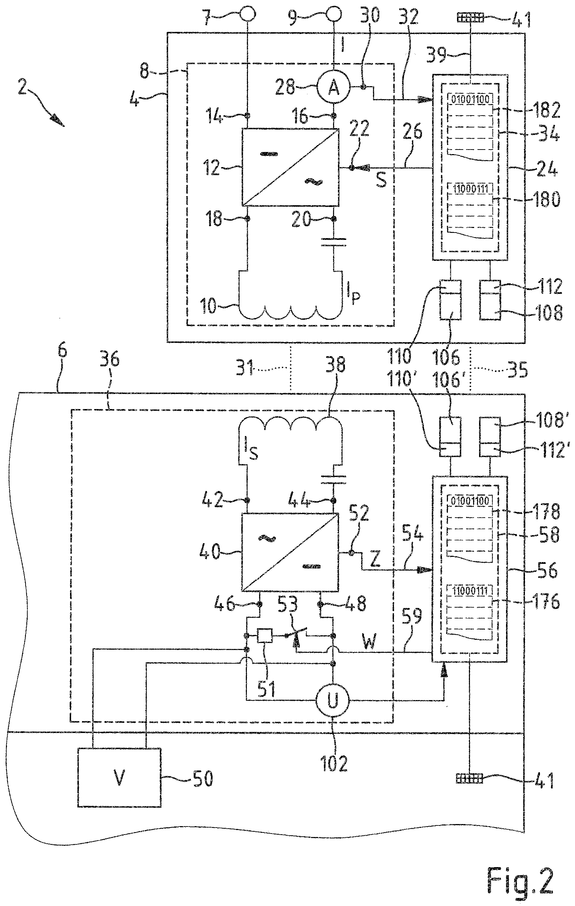

Der in Fig. 2 dargestellte Drehübertrager ist für den Einsatz im Bereich eines austauschbaren Werkzeugkopfs einer Werkzeugmaschine bestimmt, wie er beispielhaft in Fig. 1 dargestellt ist. Der in Fig. 1 gezeigte, als Feindrehkopf ausgebildete Werkzeugkopf 60 besteht im Wesentlichen aus einem Grundkörper 68, einem quer in Richtung des Pfeils 74 zur Rotationsachse 64 des Werkzeugkopfs 60 verstellbaren, ein Schneidwerkzeug 72 aufweisenden Schieber 70, mindestens einem innerhalb des Werkzeugkopfs 60 angeordneten Stromverbraucher 50, beispielsweise in Form einer Messeinrichtung 78 zur direkten Verstellwegmessung und eines elektrischen Verstellmotors 76 für den Schieber 70. Die Stromversorgung des Stromverbrauchers 50 und der Datenaustausch erfolgt über den Drehübertrager 2, der aus einem Statorteil 4 und einem Rotorteil 6 besteht. Der Werkzeugkopf 60 ist mit einem axial über den Grundkörper überstehenden Werkzeugschaft 80 mit der Maschinenspindel 62 einer Werkzeugmaschine 63 kuppelbar. Zur Einstellung eines Luftspalts 37 zwischen dem Statorteil 4 und dem Rotorteil 6 ist das Statorgehäuse 82 an einem statorfesten Halter 86 mittels eines Verstellmechanismus 88 sowohl in seinem Abstand zum Rotor als auch in seiner Drehlage um eine zur Rotationsachse 64 parallele Achse verstellbar angeordnet. Bei dem in Fig. 1 gezeigten Ausführungsbeispiel erstreckt sich das Statorteil 4 segmentartig nur über einen Teilumfang von etwa 60° bis 100° des Werkzeugschafts 80 und lässt den überwiegenden Teil des Schaftumfangs unter Bildung eines Freiraums 90 für den Zugriff eines Werkzeuggreifers 92 für den automatischen Werkzeugwechsel frei. Beim Werkzeugwechsel wird der Werkzeugkopf 60 an der Greiferrille 96 vom Werkzeuggreifer 92 von der dem Statorteil 4 gegenüberliegenden Seite erfasst und bei gelöster Werkzeugkupplung axial gegenüber der Maschinenspindel 62 verschoben. Die Kupplung des Werkzeugkopfes 60 mit der Maschinenspindel 62 erfolgt über eine maschinenseitig über eine Zugstange 98 betätigbaren Spannmechanismus, der von der Maschinenseite aus in den Hohlraum 100 des Werkzeugschafts 80 eingreift und den Werkzeugkopf 60 unter Herstellung einer Planflächenverspannung und einer Radialverspannung mit der Maschinenspindel 62 kuppelt.

Wie aus Fig. 2 zu ersehen ist, weist der Drehübertrager 2 eine induktive Energieübertragungsstrecke 31 auf, die das bereits im Zusammenhang mit Fig. 1 beschriebene maschinenfeste Statorteil 4 und das werkzeugfeste, um eine Rotationsachse 64 drehbare Rotorteil 6 umfasst. Das Statorteil 4 weist eine in einem Primärstromkreis 8 angeordnete Primärwicklung 10 und das Rotorteil 6 eine in einem Sekundärstromkreis 36 angeordnete, von der Primärwicklung 10 über den Luftspalt 37 getrennte Sekundärwicklung 38 auf.

Im Primärstromkreis 8 ist ein Wechselrichter 12 angeordnet, dessen Gleichstromeingang 14, 16 an eine Gleichstromquelle 7, 9 angeschlossen ist und dessen Wechselstromausgang 18, 20 an einen die Primärwicklung 10 enthaltenden Primärschwingkreis angeschlossen ist. Die Betriebsfrequenz des Wechselrichters 12 ist über eine statorseitige Steuerbaugruppe 24 einstellbar. Im rotorseitigen Sekundärstromkreis 36 befindet sich ein Gleichrichter 40, an dessen Wechselstromeingang 42, 44 ein die Sekundärwicklung 38 enthaltender Sekundärschwingkreis angeschlossen ist und dessen Gleichstromausgang 46, 48 als Anschluss für den rotorseitigen Stromverbraucher 50 ausgebildet ist.

Zwischen dem Statorteil 4 und dem Rotorteil 6 befindet sich außerdem eine Datenübertragungsstrecke 35, die jeweils ein Sende- und Empfangselement 106, 108 bzw. 106', 108' für die berührungsfreie bidirektionale Datenübertragung, die jeweils eine Sende- und Empfangselektronik 110, 112 bzw. 110', 112' aufweisen. Die Ansteuerung der Sende- und Empfangselemente erfolgt über die statorseitige Steuerbaugruppe 24 oder die rotorseitige Steuerbaugruppe 56. Die Sende- und Empfangselemente sind zweckmäßig Bestandteile einer induktiven, kapazitiven oder optischen Datenübertragungsstecke.

Die Wechselspannung für die Energieübertragung wird eigens in dem an eine Gleichstromquelle angeschlossenen Wechselrichter 12 nach Art einer Rechteckspannung hergestellt. Beim Zerhacken der Gleichspannung in die Wechselspannung treten vor allem bei den Nulldurchgängen höherfrequente Störungen auf, die aber schnell abklingen. In zeitlichem Abstand von jedem Nulldurchgang folgt ein längerer Zeitabschnitt bis zum nächsten Nulldurchgang, in welchem keine Störungen vorhanden sind. Andererseits müssen die Daten bei ausreichend hoher Bitrate über die Datenübertragungsstrecke 35 nicht kontinuierlich übertragen werden. Dies kann gemäß der Erfindung dazu benutzt werden, dass die Daten über die bidirektionale Datenübertragungsstrecke 35 in Form von Datenpaketen 180, 182, 176, 178 in Zeitfenstern mit zwischengeschalteten Übertragungspausen übertragen werden. Um eine störungsfreie Übertragung zu gewährleisten, wird zunächst die Information der zeitlichen Lage des Nulldurchgangs des Wechselstroms in der Energieübertragungsstrecke ermittelt. Aufgrund der Information der zeitlichen Lage des Nulldurchgangs des Wechselstroms der Energieübertragungsstrecke werden sodann die Zeitfenster für das Übertragen der Datenpakete 180, 182, 176, 178 so festgelegt, dass sie zwischen zwei aufeinanderfolgenden Nulldurchgängen des Wechselstroms liegen und dass sie jeweils einen von den Nulldurchgängen des Wechselstroms zeitlich beabstandeten Anfangs- und Endpunkt haben.

Schaltungstechnisch wird dies gemäß Fig. 2 dadurch realisiert, dass das statorseitige und das rotorseitige Sendeelement mit je einer Steuerbaugruppe 24, 56 verbunden ist, die jeweils einen Zwischenspeicher 34, 58 enthält, in welchen Datenpakete 180, 182 bzw. 176, 178 für die Absendung über die zugehörigen rotorseitigen oder statorseitigen Sendeelemente 106, 106' in einem definierten Zeitfenster abgelegt sind. Die Datenpakete 180, 182, 176, 178 sind dabei so bemessen, dass die zeitliche Länge des zugehörigen Zeitfensters kleiner ist als die halbe Periode des die Primärwicklung 10 im Primärstromkreis 8 und/oder die Sekundärwicklung 38 im Sekundärstromkreis 36 durchfließenden Wechselstroms und wobei der zeitliche Anfang und das zeitliche Ende des Zeitfensters einen zeitlichen Abstand von den aufeinanderfolgenden Nulldurchgängen des die Primärwicklung 10 bzw. die Sekundärwicklung 38 durchfließenden Wechselstroms aufweisen. Mit dieser Maßnahme wird trotz kompakter Bauweise des Drehübertragers 2 eine durch Umschaltstörungen in der Energieübertragungsstrecke ungestörte Datenübertragung erzielt.

Die folgenden Ausführungen dienen lediglich der Erläuterung zusätzlicher in der Zeichnung dargestellter Merkmale, die nicht Gegenstand der vorliegenden Erfindung sind.

Die kontaktlose Energieübertragung über den Luftspalt 37 nach dem Transformatorprinzip hat den Nachteil, dass die Kopplung zwischen der statorseitigen Primärwicklung 10 und der rotorseitigen Sekundärwicklung 38 deutlich kleiner als 1 ist und sich mit der Größe des Luftspalts 37 ändert. Auch die Induktivitäten der Primär- und Sekundärwicklung 10, 38 ändern sich mit der Größe des Luftspalts 37. Um eine maximale Leistungsübertragung zu erzielen, müssen der Primärstromkreis 8 und der Sekundärstromkreis 36 mit einer optimalen Frequenz, die etwa der Eigenfrequenz des Sekundärstromkreises entspricht, betrieben werden. Da sich die Eigenfrequenz mit der Luftspaltgröße und den Toleranzen diverser Bauteile in den Stator- und Rotorteilen 4, 6 ändert, bedarf es bei jedem Systemstart einer Anpassung der Betriebsfrequenz.

Zu diesem Zweck weist der Sekundärstromkreis 36 einen wahlweise über den Schalter 53 zuschaltbaren, den Gleichstromausgang 46, 48 im Bereich des Verbraucheranschlusses überbrückenden Testwiderstand 51 auf. Außerdem ist gemäß einer ersten Ausführungsvariante im Primärstromkreis am Gleichstromeingang 14, 16 des Wechselrichters 12 ein Strommesser 28 angeordnet, dessen Ausgang 30 mit einem Messeingang 32 der statorseitigen Steuerbaugruppe 24 kommuniziert. Alternativ hierzu ist gemäß einer zweiten Ausführungsvariante im Sekundärstromkreis ein den Spannungsabfall am Testwiderstand 51 erfassender Spannungsmesser 102 angeordnet, dessen Ausgang beispielsweise über eine Datenübertragungsstrecke 41 mit einem Messeingang 39 der statorseiteigen Steuerbaugruppe 24 kommuniziert.

Bei beiden Ausführungsvarianten weist die statorseitige Steuerbaugruppe 24 einen mit dem Frequenzeingang 22 des Wechselrichters 12 verbundenen programmierbaren Stellausgang 26 auf. Die Steuerbaugruppe 24 weist ihrerseits eine Auswerteschaltung oder -routine zum Speichern und/oder Auswerten der über den Messeingang 32 bzw. 39 in Form von Messsignalen empfangenen Messwerte des Strommessers 28 oder des Spannungsmessers 102 in Abhängigkeit von den über dem Stellausgang 26 in Form von Frequenzsignalen S abgegebenen Frequenzwerten fₚ bei zugeschaltetem Testwiderstand 51 sowie einen Datenspeicher zur Abspeicherung einer mit der Auswerteschaltung oder -routine berechneten optimalen Betriebsfrequenz fₒₚₜ auf. Die Betriebsweise dieser Schaltungsanordnung ist wie folgt:
Nach der Aktivierung des Drehübertragers 2 gibt die statorseitige Steuerbaugruppe 24 dem Wechselrichter 12 für kurze Zeit eine feste Wechselfrequenz vor, welche grob im Bereich der späteren Betriebsfrequenz liegt. Dabei wird Energie von der Statorseite auf die Rotorseite übertragen, mit der die rotorseitige Steuerbaugruppe 56 ihren Betrieb aufnehmen kann. Diese schaltet als erste über den Ausgang 59 und den Schalter 53 den Testwiderstand 51 ein, der die übertragene Energie über den Gleichstromausgang 46, 48 des Gleichrichters 40 aufnimmt und damit den Sekundärschwingkreis für die Eigenfrequenz niedrig impedant macht, ihm also eine gewisse Güte verleiht.

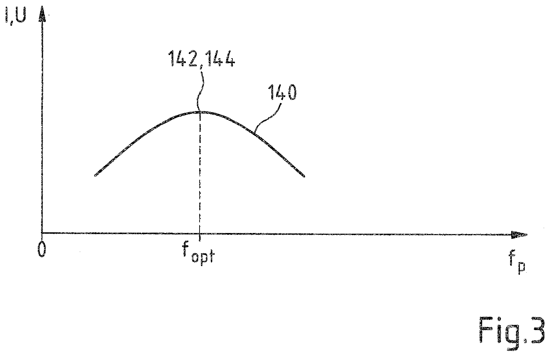

Im Anschluss daran fängt die statorseitige Steuerbaugruppe 24 an, einen vorgegebenen Frequenzbereich schrittweise durchzufahren. Dabei wird bei jedem Frequenzschritt entweder die Stromaufnahme I des Wechselrichters 12 über den Strommesser 28 oder der Spannungsabfall U am Testwiderstand 51 über den Spannungsmesser 102 gemessen und mit den zugehörigen Frequenzwerten fₚ unter Bildung einer Kurve 140 (Fig. 3) abgespeichert. Liegt nun die Eigenfrequenz des rotorseitigen Sekundärschwingkreises innerhalb des durchgefahrenen Frequenzbereichs, so wird man dort entweder ein Strommaximum 142 oder ein Spannungsmaximum 144 feststellen können (vgl. Fig. 3).

Die in der statorseitigen Steuerbaugruppe 24 vorhandene Auswerteschaltung oder -routine bestimmt nun die zum Strommaximum 142 oder Spannungsmaximum 144 gehörende Frequenz, verrechnet diese ggf. noch mit einem Korrekturwert und speichert diese als optimale Betriebsfrequenz fₒₚₜ in einen Datenspeicher für die nachfolgende Ansteuerung des Wechselrichters 12. Danach wird der Testwiderstand 51 über den Schalter 53 abgeschaltet, so dass nun die gesamte übertragbare Leistung dem Stromverbraucher 50 zur Verfügung steht.

### Bezugszeichenliste

- 2: Drehübertrager
- 4: Statorteil
- 6: Rotorteil
- 7, 9: Gleichstromquelle
- 8: Primärstromkreis
- 10: Primärwicklung
- 12: Wechselrichter
- 14: Schieber
- 14, 16: Gleichstromeingang
- 18, 20: Wechselstromausgang
- 22: Frequenzeingang
- 24: statorseitige Steuerbaugruppe
- 26: Stellausgang
- 28: Strommesser
- 30: Ausgang
- 31: Energieübertragungsstrecke
- 32: Messeingang (I)
- 34: Zwischenspeicher, Datenspeicher
- 35: Datenübertragungsstrecke
- 36: Sekundärstromkreis
- 37: Luftspalt
- 38: Sekundärwicklung
- 39: Messeingang (U)
- 40: Gleichrichter
- 41: Datenübertragungsstrecke
- 42, 44: Wechselstromeingang
- 46, 48: Gleichstromausgang
- 50: Stromverbraucher
- 51: Testwiderstand
- 53: Schalter
- 56: rotorseitige Steuerbaugruppe
- 58: Zwischenspeicher
- 59: Ausgang
- 60: Werkzeug kopf
- 62: Maschinenspindel
- 63: Werkzeugmaschine
- 64: Rotationsachse, Drehachse
- 68: Grundkörper
- 70: Schieber
- 72: Schneidwerkzeug
- 74: Pfeil
- 76: elektrischer Verstellmotor
- 78: Messeinrichtung
- 80: Werkzeugschaft
- 82: Statorgehäuse
- 86: statorfester Halter
- 88: Verstellmechanismus
- 90: Freiraum
- 92: Werkzeuggreifer
- 96: Greiferrille
- 98: Zugstange
- 100: Hohlraum
- 102: Spannungsmesser
- 106, 108: Sende- und Empfangselement (statorseitig)
- 106', 108': Sende- und Empfangselement (rotorseitig)
- 110, 112: Sende- und Empfangselektronik (statorseitig)
- 110', 112': Sende- und Empfangselektronik (rotorseitig)
- 140: Kurve
- 142: Strommaximum
- 144: Spannungsmaximum
- 176, 178, 180, 182: Datenpaket
- I: Strom
- U: Spannung
- fₚ: Frequenz
- fₒₚₜ: optimale Betriebsfrequenz

## Patentansprüche

1. Drehübertrager für Werkzeugmaschinen mit einer induktiven Übertragungsstrecke für elektrische Energie, mit einem maschinenfesten Statorteil (4), das eine in einem Primärstromkreis (8) angeordnete Primärwicklung (10) aufweist, mit einem werkzeugfesten, um eine Rotationsachse (64) drehbaren Rotorteil (6), das einen Sekundärstromkreis (36) mit einer von der Primärwicklung (10) über einen Luftspalt (37) getrennten Sekundärwicklung (38) aufweist, und mit Stator- und rotorseitigen Sende- und Empfangselementen (106, 108, 106', 108') zur bidirektionalen berührungsfreien Datenübertragung, **dadurch gekennzeichnet, dass** das statorseitige und das rotorseitige Sendeelement (106, 106') mit je einer Steuerbaugruppe (24, 56) verbunden ist, die einen Zwischenspeicher (34, 58) enthält, in welchem Datenpakete (180, 182, 176, 178) für die Übermittlung zum zugehörigen rotorseitigen oder statorseitigen Empfangselement (108, 108') in einem definierten Zeitfenster abgelegt sind, wobei die zeitliche Länge des Zeitfensters kleiner ist als die halbe Periode des die Primärwicklung (10) und/oder die Sekundärwicklung (38) durchfließenden Wechselstroms, und wobei der zeitliche Anfang und das zeitliche Ende des Zeitfensters einen zeitlichen Abstand von den aufeinanderfolgenden Nulldurchgängen des die Primärwicklung (10) und/oder die Sekundärwicklung (38) durchfließenden Wechselstroms aufweisen.

2. Verfahren für das Übertragen von Daten über eine Datenübertragungsstrecke (35) mittels eines berührungslosen Drehübertragers (2), der auch eine induktive Energieübertragungsstrecke (31) aufweist, bei dem die Daten in Form von Datenpaketen (180, 182, 176, 178) in Zeitfenstern übertragen werden, bei dem die Information der zeitlichen Lage des Nulldurchgangs eines Wechselstroms in der Energieübertragungsstrecke (31) ermittelt wird, und bei dem aufgrund der Information der zeitlichen Lage des Nulldurchgangs des Wechselstroms in einem Primärstromkreis (8) oder in einem Sekundärstromkreis (36) der Energieübertragungsstrecke die Zeitfenster für das Übertragen der Datenpakete (180, 182, 176, 178) so festgelegt werden, dass die Zeitfenster zwischen zwei aufeinanderfolgenden Nulldurchgängen des Wechselstroms liegen und jeweils einen von den Nulldurchgängen des Wechselstroms zeitlich beabstandeten Anfangs- und Endpunkt haben.

## Claims

1. Rotary transmitter for machine tools, having an inductive transmission section for electrical power, having a stator part (4), which is fixed to the machine and has a primary winding (10) which is arranged in a primary circuit (8), having a rotor part (6), which is fixed to the tool and can rotate about a rotation axis (64) and has a secondary circuit (36) with a secondary winding (38) which is separated from the primary winding (10) by means of an air gap (37), and having stator- and rotor-end transmission and reception elements (106, 108, 106', 108') for bidirectional contact-free data transmission, **characterized in that** the stator-end and the rotor-end transmission element (106, 106') are connected to a respective control assembly (24, 56) which contains a buffer memory (34, 58) in which data packets (108, 182, 176, 178) for transfer to the associated rotor-end or stator-end reception element (108, 108') in a defined time window are stored, wherein the length of the time window is smaller than half the period of the alternating current which flows through the primary winding (10) and/or the secondary winding (38), and wherein the start and the end of the time window are at a time interval from the successive zero crossings of the alternating current which flows through the primary winding (10) and/or the secondary winding (38).

2. Method for transmitting data over a data transmission section (35) by means of a contact-free rotary transmitter (2) which also has an inductive power transmission section (31), in which method the data is transmitted in the form of data packets (180, 182, 176, 178) in time windows, in which method the information relating to the temporal position of the zero crossing of an alternating current in the power transmission section (31) is ascertained, and in which method, on the basis of the information relating to the temporal position of the zero crossing of the alternating current in a primary circuit (8) or in a secondary circuit (36) of the power transmission section, the time windows for the transmission of the data packets (180, 182, 176, 178) are established such that the time windows lie between two successive zero crossings of the alternating current and each have a start and an end point which are at a time interval from the zero crossings of the alternating current.

## Revendications

1. Transformateur tournant destiné à des machines outils comportant une liaison de transmission d'énergie électrique, comportant une partie stator (4) montée à demeure sur la machine, qui présente un enroulement primaire (10) disposé dans un circuit de courant primaire (8), comportant une partie rotor (6) tournant autour d'un axe de rotation (64) monté à demeure sur la machine outil, qui présente un circuit de courant secondaire (36) muni d'un enroulement secondaire (38) séparé de l'enrouement primaire (10) par un entrefer (34), et comportant des éléments d'émission et de réception côté stator et côté rotor (106, 108, 106', 108') destinés à transmettre des données de manière bidirectionnelle sans contact, **caractérisé en ce que** l'élément d'émission côté stator et côté rotor (106, 106') est respectivement relié à un module de commande (24, 56) qui contient une mémoire tampon (34, 58) dans laquelle sont stockés des paquets de données (180, 182, 176, 178) destinés à être transmis à l'élément de réception côté rotor ou côté stator (108, 108') correspondant dans une fenêtre temporelle définie, dans lequel la longueur temporelle de la fenêtre temporelle est inférieure à la moitié de la période du courant alternatif passant à travers l'enroulement primaire (10) et/ou l'enroulement secondaire (38), et dans lequel le début temporel et l'extrémité temporelle de la fenêtre temporelle présentent une distance temporelle par rapport aux passages à zéro consécutifs du courant alternatif passant à travers l'enroulement primaire (10) et/ou l'enroulement secondaire (38).

2. Procédé pour la transmission de données par l'intermédiaire de liaisons de transmission de données (35) au moyen d'un transformateur tournant (2) sans contact qui présente également une liaison de transmission d'énergie par induction (31), dans lequel les données sont transmises dans des fenêtres temporelles sous la forme de paquets de données (180, 182, 176, 178), dans lequel l'information de position temporelle du passage à zéro d'un courant alternatif sur la liaison de transmission d'énergie (31) est déterminée, et dans lequel les fenêtres temporelles destinées à la transmission des paquets de données (180, 182, 176, 178) sont déterminées sur la base de l'information de position temporelle du passage à zéro du courant alternatif dans un circuit de courant primaire (8) ou dans un circuit de courant secondaire (36) de la liaison de transmission d'énergie de manière à ce que les fenêtres temporelles se situent entre deux passages à zéro consécutifs du courant alternatif et présentent respectivement des points de début et d'extrémité espacés temporellement des passages à zéro du courant alternatif.
